# EUROPEAN PATENT SPECIFICATION

(11) **EP 2 874 952 B1**
(45) Date of publication and mention of the grant of the patent: **18.11.2015**
(21) Application number: 13732579.1
(22) Date of filing: 02.07.2013
(51) Int. Cl.: C02F 1/50, C02F 1/28

(54) **BIOCIDAL FILTER MEDIUM**
BIOZIDES FILTERMEDIUM
MATÉRIAU FILTRANT BIOCIDE

(30) Priority: 23.07.2012 EP 12177491
(43) Date of publication of application: 27.05.2015
(73) Proprietor: Unilever N.V., 3013 AL Rotterdam (NL); Unilever PLC, London, Greater London EC4Y 0DY (GB)
(72) Inventor: BARUWATI, Babita, Whitefield Bangalore 560 066 (IN); SAWANA, Radha, Kamalkishor, Whitefield Bangalore 560 066 (IN)
(74) Representative: van den Brom, Coenraad Richard
(86) International application number: PCT/EP2013/063918
(87) International publication number: WO 2014/016082

(56) References cited:
- EP-A1- 1 201 291
- WO-A1-01/17673
- WO-A1-2012/034822
- WO-A2-03/076341
- WO-A2-2006/050477
- GB-A- 427 199
- GB-A- 1 063 669
- US-A1- 2005 084 438
- US-A1- 2008 283 466
- "Compounds of copper(II) (d9)" In: "Lehrbuch der Anorganischen Chemie", 31 December 1985 (1985-12-31), Walter de Gruyter, Berlin, New York, XP055049915, ISBN: 978-3-11-007511-3 page 1005, page 1005

## Description

### TECHNICAL FIELD

The present invention relates to a filter medium for purification of water.

### BACKGROUND AND RELATED ART

Lack of access to clean drinking water gave rise to development of various methods and technologies for purification.

Water usually contains three types of impurities. The first is suspended or particulate matter; dissolved chemicals come next, followed by microorganisms. Bacteria, viruses and cysts are the most common microorganisms. While cysts can be removed by sediment filters like carbon blocks, more powerful means are necessary for bacteria and viruses. The methods include use of chemicals and radiation.

Chlorine and Iodine are the most common chemicals which are generally used in the form of hypochlorite salts and ion-exchange resins. However, strict regulations are laid down for use of such chemicals, particularly halogens. Some countries have, by regulation, laid down upper limits on the free chlorine or iodine which can be present in purified water. Therefore water purifiers that use such chemicals also have a scavenging filter to scavenge excess biocide.

Known alternatives to halogens include elemental silver, copper and zinc and some compounds of the stated metals. Such compounds include oxides and other salts like halides. Such metals and their compounds are generally impregnated or adsorbed on a porous medium or a carrier. Commonly used media include activated carbon, clay and activated alumina used either in the free form or in the form of a bound block. JP59066321 A2 (NITTA BELT KK, 1984) discloses a porous carrier such as a molecular sieve, a silica gel, alumina or urethane foam to which a sterilizing metal such as copper or silver or salts thereof are adhered.

JP3287508 A2 (NIPPON DENSHI ZAIRYO KK, 1998) discloses that porous activated alumina is treated with an alkali solution and a silica-containing solution to form a coating film of aluminosilicate containing metal capable of ion exchange and metallic ion having bactericidal action is carried in the film of aluminosilicate by ion exchange. As the metallic ion having bactericidal action, metallic ion selected from Ag, Cu, Zn, Hg, Sn, Pb, Bi, Cd and Cr is used.

JP1258792 A2 (NITSUKO KK, 1989) discloses a method for preparing antibacterial alumina sol by adhering a metal such as silver or copper or a compound such as silver oxide or copper oxide having antibacterial action or a compound thereof to the surface of aluminum oxide in alumina sol. The preferred content of the antibacterial metal or compound in the antibacterial agent is 10 to 7.5 weight percent.

WO2006050477 A1 (K2 Concepts) discloses anti-microbial compositions and devices comprising the compositions. Also disclosed is a fluid treatment medium having a mixture of silver oxide and copper oxide on alumina support material. Copper oxides include cuprous and cupric oxide. Typical amount of silver oxide and copper oxide is about 0.1 wt% to about 2.0 wt%. The antimicrobial composition prevents or slows bacteria growth in a fluid, the formation of scale deposits, removes bacteria from a fluid, removes biofilm from a surface of a container of water, controls the reoccurrence of bacteria growth on a surface of a container of water and in the water within the container, and prevents the formation of scale deposits.

US2008283466 A1 (STREAMLINE CAPITAL INC) also discloses a filter medium having mixture of silver oxide and copper oxide on alumina support material. The material is used for control of microbial contamination.

WO03076341A2 (APYRON TECHNOLOGIES INC) also discloses a filter medium having mixture of silver oxide and copper oxide on alumina support material. The material is used for control of microbial contamination.

Log-kill (or log removal) is a standard method of indicating efficacy of any purification medium, especially in the context of water purification. The dosage of silver or copper metal in the filter medium is limited on account of safety and efficacy. Excess silver usually leaches into purified water and excess copper oxide manifests itself in the form of a black film on the surface of the filter medium. Consumers will generally not prefer such a filter medium.

### SUMMARY OF THE INVENTION

We have observed that there is surprising synergistic activity between a compound of Silver and Copper hydroxide in the form of a single or unitary filter medium selected from alumina or titanate having impregnated therein, a compound of Silver and Copper hydroxide. The effect has been particularly observed in the case of alumina as the preferred filter medium.

The synergistic activity leads to higher log kill of virus and particularly bacteria present in water leading to an unexpected reduction in the numbers thereby rendering the water purer. Hitherto, on account of poorer stability, it was found to be difficult to use Copper hydroxide for antimicrobial activity, although Copper oxide was used very often.

In accordance with a first aspect disclosed is a filter medium selected from alumina or titanate having, incorporated therein, a compound of Silver and Copper hydroxide.

In accordance with a second aspect disclosed is a method for preparation of a filter medium of the first aspect including the steps of:
(i) mixing a filter medium with a solution of a water-soluble salt of Copper;
(ii) raising pH of the mix of step (i) to at least 10 by adding an alkali;
(iii) removing excess alkali from the mix of step (ii) by washing it with water;
(iv) drying the washed mixture;
(v) mixing the dried mixture with aqueous solution of silver nitrate;
(vi) adding a halide salt to the mix obtained in step (v); and
(vii) filtering and drying the mix of step (vi).

In accordance with a third aspect disclosed is a water purification device having the filter medium of the first aspect.

In accordance with a fourth aspect disclosed is use of the filter medium of the first aspect for purification of water in a water purification device.

The invention will now be explained in details

### DETAILED DESCRIPTION

In accordance with a first aspect disclosed is a filter medium having, incorporated therein, a compound of Silver and Copper hydroxide.

The medium can be in particulate, powder, or granular form. The filter medium is selected from alumina or titanate.

It was observed that either it is difficult to impregnate Copper in the form of Copper hydroxide on media such as activated carbon, zinc oxide, sand, bentonite clay and diatomaceous earth, or that once deposited or impregnated by suitable means, the Copper hydroxide instantaneously turns into Copper oxide, presumably because it is unstable. When Copper hydroxide gets converted to Copper oxide, the efficacy is considerably lowered. An increase in Copper content also is not believed to off-set the lower efficacy of Copper oxide. Without wishing to be bound by theory it is believed that none of the well known conventional filter media showed the peculiar behavior of alumina towards Copper hydroxide. Accordingly, it is particularly preferred that each of the filter medium is alumina. It is further preferred that the alumina is acid washed activated alumina.

Although less preferred, fibers can also be used as a filter medium. Fibers are organic polymeric fibers which are capable of being fibrillated. Fibrillated fibers are generally advantageous due to their exceptionally fine dimensions and potentially low cost.

Such fibrillated fibers include polymers such as acrylic, acrylonitrile; liquid crystal polymers, ion-exchange resins, engineered resins, cellulose, rayon, ramie, wool, silk, glass, metal, ceramic, other fibrous materials, or combinations thereof with the medium disclosed earlier. Such a filter medium can also be in the form of a flat sheet medium made from fibers, or combinations of fibers and particulate medium, which may ultimately be rolled, layered, and/or pleated for enhanced filtering applications. Paper, polyester and nylon cloth did not show any favorable interaction with Copper salts at lower impregnation level of 1% Copper, making it difficult for the medium to be used for impregnation.

It is preferred that the surface area of the filter medium is from 100 to 400 m²/g, preferably 200 to 400 m²/g and most preferably 300 to 400 m²/g. For alumina, it is particularly preferred that the surface area is 300 to 340 m²/g.

It is preferred that pore volume of the filter medium is 0.4 to 0.7 cc/g, preferably 0.4 to 0.6 cc/g and most preferably 0.4 to 0.5 cc/g units. For alumina, it is particularly preferred that the pore volume is 0.4 to 0.5 cc/g.

It is preferred that particle size of said filter medium is 75 to 1000 µm, more preferably 75 to 350 µm, and most preferably 75 to 250 µm.

With the disclosed benefits of alumina, it is particularly preferred that the filter medium is alumina.

Silver is preferably impregnated on the filter medium in the form of the Silver halide. A particularly preferred halide is Silver bromide for the reasons of its solubility. It is preferred that the percentage of Silver in the filter medium is 0.2 to 2 wt%, more preferably 0.2 to 1 % and most preferably 0.4 to 0.8 %.

Similarly, it is preferred that Copper hydroxide is present in an amount corresponding to 0.5 wt% to 4 wt% percentage of Copper, more preferably 1 to 2 wt% and most preferably 1 to 1.6 wt%.

The difference between known treated filter media and the filter medium disclosed herein is in the use of Copper hydroxide instead of Copper oxide. When an attempt is made to increase the amount of Copper oxide on the medium with a view to obtain a possibly more potent filter medium, the material is found to turn black. This indicates that there are obvious restrictions on quantity of copper that can be impregnated although more copper would provide a more efficacious and potent medium. However, in the case of the disclosed filter medium, it has been observed that effectively, more amount of elemental Copper can be impregnated while avoiding the drawbacks and limitations typically faced by Copper oxide.

Normally, even Copper hydroxide gradually turns into Copper oxide on heating above 100 °C or when the pH of the medium is increased to 14 and beyond, but this was not observed especially when, activated alumina was used as the filter medium. This medium was found to be stable even up to 900 °C. It is possible to impregnate more than 1.6 wt% copper by choosing a suitable grade of the filter medium, particularly a grade having more surface area. Such media can allow for impregnation of Copper hydroxide in an amount corresponding to or equivalent to upto 3 wt% Copper or even upto 4 wt% Copper.

The medium can be used in free form or in the form of a bound block. It is well known that addition of thermoplastic or thermoset materials in powder, particulate, or fiber form assist in binding the active particles of the filter medium. This binder material may include any of following types such as polyolefins, polyvinyl halides, polyvinyl esters, polyvinyl ethers, polyvinyl alcohols, polyvinyl sulfates, polyvinyl phosphates, polyvinyl amines, polyamides, polyimides, polyoxidiazoles, polytriazols, polycarbodiimides, polysulfones, polycarbonates, polyethers, polyarylene oxides, polyesters, polyarylates, phenol-formaldehyde resins, melamine-formaldehyde resins, formaldehyde-ureas, ethyl-vinyl acetate copolymers, co-polymers and block interpolymers thereof, and combinations thereof. Variations of the above materials and other useful polymers include the substitution of groups such as hydroxyl, halogen, lower alkyl groups, lower alkoxy groups, monocyclic aryl groups, and the like. Other potentially applicable materials include polymers such as polystyrenes and acrylonitrile-styrene copolymers, styrene-butadiene copolymers, and other non-crystalline or amorphous polymers and structures.

A detailed list of binder materials include end-capped polyacetals, such as poly(oxymethylene) or polyformaldehyde, poly(trichloroacetaldehyde), poly(n-valeraldehyde), poly(acetaldehyde), and poly(propionaldehyde); acrylic polymers, such as polyacrylamide, poly(acrylic acid), poly(methacrylic acid), poly(ethyl acrylate), and poly(methyl methacrylate); fluorocarbon polymers, such as poly(tetrafluoroethylene), perfluorinated ethylene-propylene copolymers, ethylene-tetrafluoroethylene copolymers, poly(chlorotrifluoroethylene), ethylene-chlorotrifluoroethylene copolymers, poly(vinylidene fluoride), and poly(vinyl fluoride); polyamides, such as poly(6-aminocaproic acid) or poly(.epsilon.-caprolactam), poly(hexamethylene adipamide), poly(hexamethylene sebacamide), and poly(11-aminoundecanoic acid); polyaramides, such as poly(imino-1,3-phenyleneiminoisophthaloyl) or poly(m-phenylene isophthalamide); parylenes, such as poly-2-xylylene, and poly(chloro-1-xylylene); polyaryl ethers, such as poly(oxy-2,6-dimethyl-1,4-phenylene) or poly(p-phenylene oxide); polyaryl sulfones, such as poly(oxy-1,4-phenylenesulfonyl-1,4-phenyleneoxy-1,4-phenyl-eneisopropylid- e ne-1,4-phenylene), and poly(sulfonyl-1,4-phenylene-oxy-1,4-phenylenesulfonyl-4,4'-biphenylene); polycarbonates, such as poly-(bisphenol A) or poly(carbonyldioxy-1,4-phenyleneisopropylidene-1,4-phenylene); polyesters, such as poly(ethylene terephthalate), poly(tetramethylene terephthalate), and poly(cyclohexyl-ene-1,4-dimethylene terephthalate) or poly(oxymethylene-1,4-cyclohexylenemethyleneoxyterephthaloyl); polyaryl sulfides, such as poly(p-phenylene sulfide) or poly(thio-1,4-phenylene); polyimides, such as poly(pyromellitimido-1,4-phenylene); polyolefins, such as polyethylene, polypropylene, poly(1-butene), poly(2-butene), poly(1-pentene), poly(2-pentene), poly(3-methyl-1-pentene), and poly(4-methyl-1-pentene); vinyl polymers, such as poly(vinyl acetate), poly(vinylidene chloride), and poly(vinyl chloride); diene polymers, such as 1,2-poly-1,3-butadiene, 1,4-poly-1,3-butadiene, polyisoprene, and polychloroprene; polystyrenes; and copolymers of the foregoing, such as acrylonitrilebutadiene-styrene (ABS) copolymers.

Polyolefin based materials are advantageous. Polyolefin powders, such as MICROTHENE^{®} of Equistar Chemicals, LP of Houston, Tex., and the like, may be used. These powders comprise ultra-fine, spherically shaped particles with narrow size distribution suitable for use in a broad range of specialty applications. Polyolefin powders combine the unique properties of a polyolefin resin with a microfine particle size.

Polyolefin powders are typically added to certain thermoplastic and thermosetting resins to improve surface appearance, dimensional stability, extrudibility or shrinkage characteristics. Generally, by adding one percent to six percent by weight polyolefin powder the resin filler distribution, mold flow, and moisture resistance, are improved while strength properties are successfully retained.

When used, the content of binder in the bound filter is 10% to 40% by weight, more preferably about 15% to 25%. It is desirable for the binder material to have softening point significantly lower than a softening point of the filter medium so that the core filter media/binder combination can be heated to activate the binder material, while the microporous structure does not melt and lose porosity as a consequence.

In accordance with another aspect, disclosed is a water purification device having the filter medium of the first aspect. A detailed account of the preferred features of water purification devices can be found in e.g. WO2005095284 A1 (Unilever).

In another aspect disclosed is use of the filter medium of the first aspect for purification of water in a water purification device.

The filter medium is selected from alumina or titanate.

Alumina is the most preferred medium for the reasons which have been described earlier.

A method of preparation of the unitary filter medium is disclosed in another aspect of the invention.

In accordance with yet another aspect disclosed is a method for preparing a filter medium of the first aspect, the method having the steps of:
(i) mixing a filter medium with a solution of a water-soluble salt of Copper;
(ii) raising pH of the mix of step (i) to at least 10 by adding an alkali;
(iii) removing excess alkali from the mix of step (ii) by washing it with water;
(iv) drying the washed mixture;
(v) mixing the dried mixture with aqueous solution of silver nitrate;
(vi) adding a halide salt to the mix obtained in step (v); and,
(vii) filtering and drying the mix of step (vi).

The invention will now be described in greater details with the help of non-limiting examples.

### EXAMPLES

### EXAMPLE 1 - method for preparation of a preferred filter medium

Commercially available acid washed activated alumina having surface area 320 m²/g and pore volume 0.45 cc/g was sieved to separate out the particles of 75 to 250 µm which were used further. These particles were washed several times with distilled water and dried at 120 °C.

In stage 1, an aqueous solution of 6.09 g copper nitrate trihydrate [Cu(NO₃)₂.3H₂O] was prepared by dissolving the salt in 40 ml ultrapure water. The solution was mixed with 100 g alumina until the alumina acquired a uniform shade of blue. The mixture was left aside for 4 hours. Thereafter, 4 N NaOH was added to the mixture until the pH of the medium was 10. The resultant slurry was kept aside for about 2 to 3 hours, after which it was washed with water to remove excess alkali, filtered and then dried at 150 °C for 8 hours. This gave a filter medium impregnated with 1.6 % Copper in the form of Copper hydroxide.

In the next stage, Silver was impregnated in the form of Silver bromide on the same medium.

A solution of 1.575 g Silver nitrate was prepared in 35 ml water which was mixed with 100 g of alumina already impregnated with Copper hydroxide. The mixture was left in dark environment for 4 hours. Thereafter, 15 ml of water containing 1.325 g dissolved Potassium bromide (the halide salt) was added to this mixture and mixed well. The mixture was then washed with water, filtered and dried at 110 °C to get the impregnated filter medium having, in all, 1% Silver on alumina and 1.6 % Copper on alumina. With appropriate variations in the content of Silver nitrate and the salt of Copper, a filter medium with varying levels of Silver and Copper can be prepared.

A packed column of 15 cm height and 3.4 cm diameter was made using 135 g of the filter medium of Example-1. A sample of impure test water spiked with surrogates of bacteria and virus was prepared and the test water was passed through the packed column. For comparative analysis, some more columns of the same dimensions were tested.

The results (log reduction) are shown in table-1. Also shown are the results where only one of the two metals was impregnated at the same levels.

**Table-1**

| filter medium | Log reduction of bacteria | log reduction of virus |
|---|---|---|
| Only 1.6 % Copper on alumina | 1.6 | 5.3 |
| Only 1 % Silver on alumina | 1.5 | 5.3 |
| Example-1 | 7.5 | 5.3 |

The data in table-1 indicates significantly superior log reduction values, especially for bacteria. The figure of 7-log reduction implies reduction by a factor of the order of 10⁷. The data indicates the synergistic activity of the unitary filter medium having incorporated therein the compound of Silver and Copper hydroxide.

### EXAMPLE-2: Comparison between copper oxide and copper hydroxide

Two filters of identical shapes and containing equal quantity of filter media were prepared. These filters were used to conduct an experiment in which water spiked with bacteria (equivalent to 7 log) and with virus (equivalent to 5 log) was passed through them under identical conditions. Results are shown in table 2. The table also contains information about the composition of the filters.

**Table 2**

| Filter medium | Bacteria log reduction | virus log reduction |
|---|---|---|
| 1.6% Cu (as CuOH₂) on alumina | 1.8 | 5.0 |
| 5% Cu (as CuO) on alumina | 1.3 | 2.7 |
| 1.6% Cu (as CuOH₂) and 0.4% Ag (as AgBr) on alumina | 7.0 | 5.0 |
| 5% Cu (as CuO) and 1.25% Ag (as AgBr) on alumina | 7.0 | 5.0 |

The data in table 2 indicates that the filter made of alumina comprising copper hydroxide and the silver compound is effective against bacteria as well as virus. On the other hand, the one made of alumina and comprising copper oxide alone was less effective against bacteria. The data further indicates how a combination of copper hydroxide and the silver compound is superior to that of copper oxide and the silver compound in terms of the actual metal content that leads to the technical effect.

## Claims

1. A filter medium selected from alumina or titanate comprising, incorporated therein, a compound of Silver and Copper hydroxide.

2. A filter medium as claimed in claim 1 wherein the percentage of Silver is 0.2 to 2 wt%.

3. A filter medium as claimed in claim 1 or 2 wherein the percentage of Copper is 0.5 to 4 wt%.

4. A filter medium as claimed in any one of the preceding claims wherein surface area of said filter medium is 100 to 400 m²/g.

5. A filter medium as claimed in any one of the preceding claims wherein pore volume of said filter medium is 0.4 to 0.7 cc/g.

6. A method for preparation of a filter medium as claimed in claim 1, said method comprising the steps of:
(i) mixing a filter medium with a solution of a water-soluble salt of Copper;
(ii) raising pH of the mix of step (i) to at least 10 by adding an alkali;
(iii) removing excess alkali from the mix of step (ii) by washing it with water;
(iv) drying said washed mixture;
(v) mixing said dried mixture with aqueous solution of silver nitrate;
(vi) adding a halide salt to the mix obtained in step (v);
(vii) filtering and drying the mix of step (vi).

7. A water purification device comprising the filter medium according to any one of claims 1 to 5.

8. Use of the filter medium accoring to any one of claims 1 to 5 for the purification of water in a water purification device.

## Patentansprüche

1. Filtermedium ausgewählt aus Aluminiumoxid oder Titanat, umfassend darin eingelagert eine Verbindung von Silber und Kupferhydroxid.

2. Filtermedium gemäß Anspruch 1, wobei der Prozentsatz von Silber 0,2 bis 2 Gew.-% beträgt.

3. Filtermedium gemäß Anspruch 1 oder 2, wobei der Prozentsatz von Kupfer 0,5 bis 4 Gew.-% beträgt.

4. Filtermedium gemäß irgendeinem der vorhergehenden Ansprüche, wobei die spezifische Oberfläche des Filtermediums 100 bis 400 m²/g beträgt.

5. Filtermedium gemäß irgendeinem der vorhergehenden Ansprüche, wobei das Porenvolumen des Filtermediums 0,4 bis 0,7 cc/g beträgt.

6. Verfahren zur Herstellung eines Filtermediums gemäß Anspruch 1, wobei das Verfahren die Schritte umfasst von:
(i) Mischen eines Filtermediums mit einem Lösung eines wasserlöslichen Salzes von Kupfer;
(ii) Anheben des pH-Werts der Mischung aus Schritt (i) auf mindestens 10 durch Zusatz von einem Alkali;
(iii) Entfernen des überschüssigen Alkalis aus der Mischung von Schritt (ii), indem diese mit Wasser gewaschen wird;
(iv) Trocknen der gewaschenen Mischung;
(v) Mischen der getrockneten Mischung mit einer wässrigen Lösung von Silbernitrat;
(vi) Zusetzen eines Halogenidsalzes zu der in Schritt (v) erhaltenen Mischung;
(vii) Filtrieren und Trocknen der Mischung aus Schritt (vi).

7. Vorrichtung zum Reinigen von Wasser, umfassend das Filtermedium gemäß irgendeinem der Ansprüche 1 bis 5.

8. Verwendung des Filtermediums gemäß irgendeinem der Ansprüche 1 bis 5 für die Reinigung von Wasser in einer Vorrichtung zum Reinigen von Wasser.

## Revendications

1. Milieu filtrant choisi parmi de l'alumine ou du titanate comprenant, incorporé dans celui-ci, un composé d'hydroxyde d'argent et de cuivre.

2. Milieu filtrant selon la revendication 1, dans lequel le pourcentage d'argent est de 0,2 à 2 % en poids.

3. Milieu filtrant selon la revendication 1 ou 2, dans lequel le pourcentage de cuivre est de 0,5 à 4 % en poids.

4. Milieu filtrant selon l'une quelconque des revendications précédentes, dans lequel la surface spécifique dudit milieu filtrant est de 100 à 400 m²/g.

5. Milieu filtrant selon l'une quelconque des revendications précédentes, dans lequel le volume de pores dudit milieu filtrant est de 0,4 à 0,7 cm³/g.

6. Procédé de préparation d'un milieu filtrant selon la revendication 1, ledit procédé comprenant les étapes de :
(i) mélange d'un milieu filtrant avec une solution d'un sel de cuivre soluble dans l'eau ;
(ii) élévation du pH du mélange de l'étape (i) jusqu'au moins 10 par addition d'un alcali ;
(iii) élimination de l'alcali en excès du mélange de l'étape (ii) par lavage de celui-ci avec de l'eau ;
(iv) séchage dudit mélange lavé ;
(v) mélange dudit mélange séché avec une solution aqueuse de nitrate d'argent ;
(vi) addition d'un sel d'halogénure au mélange obtenu dans l'étape (v) ;
(vii) filtration et séchage du mélange de l'étape (vi).

7. Dispositif de purification d'eau comprenant le milieu filtrant selon l'une quelconque des revendications 1 à 5.

8. Utilisation du milieu filtrant selon l'une quelconque des revendications 1 à 5 pour la purification d'eau dans un dispositif de purification d'eau.
